(19) Europäisches Patentamt
European Patent Office
Office européen des brevets

(11) **EP 3 100 818 B1**

(12) **EUROPEAN PATENT SPECIFICATION**

(45) Date of publication and mention
of the grant of the patent:
**27.05.2020 Bulletin 2020/22**

(51) Int Cl.:
**B23K 35/30** (2006.01)          **B23K 9/23** (2006.01)
**C22C 19/05** (2006.01)

(21) Application number: **15741016.8**

(22) Date of filing: **22.01.2015**

(86) International application number:
**PCT/JP2015/051595**

(87) International publication number:
**WO 2015/111641 (30.07.2015 Gazette 2015/30)**

(54) **WELDING MATERIAL FOR NI-BASED HEAT-RESISTANT ALLOY, AND WELDED METAL AND WELDED JOINT EACH USING SAME**

SCHWEISSMATERIAL FÜR NI-BASIERTE HITZEBESTÄNDIGE LEGIERUNG SOWIE GESCHWEISSTES METALL SOWIE SCHWEISSVERBINDUNG DAMIT

MATÉRIAU DE SOUDAGE POUR ALLIAGE RÉSISTANT À LA CHALEUR À BASE DE NI, MÉTAL SOUDÉ À L'AIDE DE CE MATÉRIAU, ET RACCORD SOUDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2014 JP 2014012266**

(43) Date of publication of application:
**07.12.2016 Bulletin 2016/49**

(73) Proprietor: **Nippon Steel Corporation**
**Tokyo 100-8071 (JP)**

(72) Inventors:
• **HIRATA, Hiroyuki**
  **Tokyo 100-8071 (JP)**
• **JOTOKU, Kana**
  **Tokyo 100-8071 (JP)**
• **HAMAGUCHI, Tomoaki**
  **Tokyo 100-8071 (JP)**
• **YOSHIZAWA, Mitsuru**
  **Tokyo 100-8071 (JP)**
• **ONO, Toshihide**
  **Tokyo 100-8071 (JP)**
• **ISEDA, Atsuro**
  **Tokyo 100-8071 (JP)**

(74) Representative: **Zimmermann & Partner**
**Patentanwälte mbB**
**Josephspitalstr. 15**
**80331 München (DE)**

(56) References cited:
**EP-A1- 0 708 184      EP-A1- 2 008 757**
**EP-A1- 2 305 415      WO-A1-2011/158706**
**JP-A- 2012 000 616    JP-A- 2013 095 949**

**Description**

TECHNICAL FIELD

The present invention relates to a welding material for Ni-based heat resistant alloy, and a weld metal and a welded joint formed using the welding material, in more detail relates to a welding material that is suitable for welding a Ni-based heat resistant alloy utilized for equipment operated at high temperatures such as a power generation boiler, and a weld metal and a welded joint formed by using the welding material.

BACKGROUND ART

In recent years, from the viewpoint of reducing environmental loads, higher temperature/pressure conditions for operating power generation boilers and the like have been promoted on a worldwide scale, and a material used therefor is required to have more excellent high-temperature strengths.

For example, materials meeting such a demand include a Ni-based heat resistant alloy defined as UNS06617. In addition, Patent Documents 1 to 5 disclose various Ni-based alloys. These all define many different alloying element ranges, in order to satisfy performances necessary for a base metal.

Meanwhile, when these Ni-based heat resistant alloys are used for structures, the structures are typically assembled by welding, and as a welding material for Ni-based heat resistant alloy used therefor, "AWS A5.14-2009 ER NiCrCoMo-1" has already been available.

Furthermore, Patent Document 6 proposes a welding material for Ni-based alloy that achieves high strengthening by taking advantage of solid-solution strengthening by Mo and W and a precipitation strengthening effect by Al and Ti. In addition, Patent Document 7 proposes a welding material that secures creep strength by similarly taking advantage of a precipitation strengthening effect by Al and Ti and has high-speed weldability by homogeneously dispersing $M_6C$ carbide and MC carbide in the welding material.

Now, welded structures formed using these Ni-based heat resistant alloys and welding materials for Ni-based heat resistant alloy are used at high temperatures, but there is a problem in that a cracking (a stress relaxation cracking) occurs in a welded zone in long-term and high-temperature use.

On that account, Patent Document 8 proposes a welding material that secures stress relaxation cracking resistance by adjusting the contents of Al and Mo within appropriate ranges and achieves the prevention of solidification cracking by defining the contents of C and Cr.

LIST OF PRIOR ART DOCUMENTS

PATENT DOCUMENT

Patent Document 1: US4877461A

Patent Document 2: US4765956A

Patent Document 3: US5372662A

Patent Document 4: JP9-157779A

Patent Document 5: JP2001-073053A

Patent Document 6: WO 2010/013565

Patent Document 7: WO 2007/119847

Patent Document 8: JP2012-000616A

DISCLOSURE OF THE INVENTION

PROBLEMS TO BE SOLVED BY THE INVENTION

A welding material for Ni-based heat resistant alloy, or "AWS A5.14-2009 ER NiCrCoMo-1", and the welding materials for Ni-based alloy disclosed in Patent Documents 6 to 8, which are described above, indeed satisfy given performances that are the respective objectives. However, in multi-layer welding, in particular when the multi-layer welding is performed with a low heat input to prevent hot cracking in welding such as solidification cracking, it has been found that these welding materials exhibit poor weldability in fabrication and are prone to cause a so-called "lack of fusion", one of the welding defects, raising usability problems.

An objective of the present invention is to provide a welding material for Ni-based heat resistant alloy having an excellent weldability in fabrication and a weld metal, formed using the welding material, that has an excellent creep strength at high temperatures and an excellent stress relaxation cracking resistance while in use. Furthermore, another objective of the present invention is to provide a welded joint that is formed of a weld metal formed using this welding material and a base metal having an excellent creep strength at high temperatures.

MEANS FOR SOLVING THE PROBLEMS

The present inventors conducted detailed researches to solve the problems. Specifically, the present inventors conducted detailed researches on lack of fusion that occurred in a welded joint, and consequently the matters described as the following (a) and (b) were clarified.

(a) The lack of fusion occurred on the boundary between a preceding bead and a succeeding bead in multi-layer welding.

(b) In the portion where the lack of fusion occurred, welding slag remained that contained Al and Si.

In addition, the present inventors conducted detailed observation of welding phenomena, and consequently the matter described as the following (c) was clarified.

(c) Welding slag is formed by reaction in a molten pool and also formed by the agglomeration of oxides that remains on a welding material surface and migrates on the surface of the molten pool with the melting of welding material.

From the matters (a) to (c) described above, the present inventors estimated that a lack of fusion occurs for the following reason described as (d).

(d) Oxides agglomerate in welding to remain on a weld bead in the form of welding slag, the oxides including those formed by the reaction in a molten pool between Al, Si, and the like, and oxygen (O), and those of Al and Si remaining on a welding material surface in producing the welding material. When welding is performed on the bead in a succeeding pass, the welding slag cannot be melted sufficiently, particularly in low heat input welding, because the welding slag has high melting points, resulting in a lack of fusion.

On the basis of the estimation described above, the present inventors conducted studies on preventing lack of fusion. Consequently, the matter described as the following (e) was clarified.

(e) It is effective in preventing lack of fusion to reduce oxides formed by deoxidation reaction in a molten pool and to reduce an oxide layer present on a welding material surface, specifically, to reduce the contents of Al, Si, and oxygen (O) in a welding material, as well as to control the thickness of the oxide layer remaining on the welding material surface.

Note that, for the Ni-based heat resistant welding material that is the subject of the present invention, it is effective in securing stress relaxation cracking resistance to reduce the content of Al because Al considerably increases stress relaxation cracking susceptibility in long-term use at high temperatures. However, Al precipitates in the form of an intermetallic compound in a weld metal in long-term use, and is an essential element for securing creep strength in the Ni-based heat resistant welding material described above.

Hence, the present inventors further proceeded with the detailed studies, and consequently the following matters (f) and (g) were clarified.

(f) Adjusting the contents of Al, Si, and O and controlling the contents of Ni, Co, Cr, Mo, and Mn within appropriate ranges are effective in preventing lack of fusion described in (e) above, and also effective in delaying the start time of precipitation of the intermetallic compound without reducing the amount of the intermetallic compound.

(g) By controlling the contents of Al, Si, O, Ni, Co, Cr, Mo, and Mn described above, as well as the contents of C, P, S, Ti, and N within predetermined ranges, and by setting the thickness of an oxide layer on a welding material surface at 30 $\mu$m or less, it is possible to prevent lack of fusion through securing excellent weldability in fabrication during welding, and further to provide both of a good stress relaxation cracking resistance and an excellent creep strength in long-term use at high temperatures. Specifically, it is necessary to determine the chemical composition of the welding material as, by mass%, C: 0.08 to 0.12%; Si: 0.10% or less; Mn: 0.02 to 1.50%; P: 0.008% or less;

S: 0.002% or less; Ni: more than 56.0% and 60.0% or less; Co: 8.0 to 12.0%; Cr: 18.0 to 22.0%; Mo: 6.0 to 10.0%; Ti: 0.01 to 0.50%; Al: 0.50 to 1.00%; O: 0.010% or less; and N: 0.010% or less, with the balance: Fe and impurities. Through the adjustment of the chemical composition described above and the thickness adjustment of the oxide layer on the surface, it is possible to obtain a Ni-based heat resistant welding material that secures weldability in fabrication, as well as the creep strength and the stress relaxation cracking resistance properties of the weld metal.

Then, with the welding material for Ni-based heat resistant alloy satisfying (g) described above, it is possible to obtain a weld metal and a welded joint that is formed of a base metal of a Ni-based heat resistant alloy, the weld metal having stress relaxation cracking resistance and an excellent creep strength in high-temperature use, the base metal being excellent in high temperature strength.

The present invention has been made based on the findings described above, and the gist of the present invention is a welding material for Ni-based heat resistant alloy, a weld metal, and a welded joint, described as follows.

(1) A welding material for Ni-based heat resistant alloy, the welding material having a chemical composition consisting, by mass%, of:

C: 0.08 to 0.12%,
Si: 0.10% or less,
Mn: 0.02 to 1.50%,
P: 0.008% or less,
S: 0.002% or less,
Ni: more than 56.0% to 60.0% or less,
Co: 8.0 to 12.0%,
Cr: 18.0 to 22.0%,
Mo: 6.0 to 10.0%,
Ti: 0.01 to 0.50%,
Al: 0.50 to 1.00%,
N: 0.010% or less,
O: 0.010% or less,
Nb: 0 to 0.50%,
B: 0 to 0.0050%,
Ca: 0 to 0.050%,
Mg: 0 to 0.050%,
REM: 0 to 0.20%, and
the balance: Fe and impurities, wherein
a thickness of an oxide layer formed on the surface of the welding material is 30 $\mu$m or less.

(2) The welding material for Ni-based heat resistant alloy according to (1), wherein
the chemical composition contains one or more elements selected from, by mass%:

Co: 9.0 to 11.0%,
Cr: 19.0 to 21.0%, and
Mo: 7.0 to 9.0%.

(3) The welding material for Ni-based heat resistant alloy according to (1) or (2), wherein
the chemical composition contains one or more elements selected from, by mass%:

Nb: 0.01 to 0.50%,
B: 0.0002 to 0.0050%,
Ca: 0.0005 to 0.050%,
Mg: 0.0005 to 0.050%, and
REM: 0.01 to 0.20%.

(4) The welding material for Ni-based heat resistant alloy according to any one of (1) to (3), wherein
the chemical composition satisfies a following formula (i):

$$Mn \geq 0.2 \times Al - 0.1 \qquad (i)$$

wherein each symbol of an element in the formula denotes the content of each element (mass%) in welding material.
(5) A weld metal formed by using the welding material for Ni-based heat resistant alloy according to any one of (1) to (4).
(6) A welded joint comprising the weld metal according to (5) and a base metal of a Ni-based heat resistant alloy.
(7) The welded joint according to (6), wherein
the base metal has a chemical composition comprising, by mass%:

Ni: 41.0 to 60.0%,
Cr: 18.0 to 25.0%, and
one or more elements of Mo and W: 6.0 to 10.0% in total.

(8) The welded joint according to (7), wherein
the base metal has a chemical composition consisting, by mass%, of:

C: 0.04 to 0.12%,
Si: 1.00% or less,
Mn: 1.50% or less,
P: 0.03% or less,
S: 0.01% or less,
Ni: 41.0 to 60.0%,
Co: 15.0% or less,
Cr: 18.0 to 25.0%,
one or more elements of Mo and W: 6.0 to 10.0% in total,
Ti: 0.01 to 0.50%,
Nb: 0.50% or less,
N: 0.010% or less,
B: 0.0050% or less,
Al: 1.50% or less, and
the balance: Fe and impurities.

(9) Use of the welding material according to any one of (1) to (4) for welding a Ni-based heat resistant alloy.
(10) Use according to (9), wherein the Ni-based heat resistant alloy is utilized for a power generation boiler.
(11) Use according to (9) or (10), wherein in producing the welding material, the oxide layer thickness on the welding material surface is adjusted to 30 $\mu$m or less by performing heat treatment in reducing gas such as hydrogen preventing the oxidation of the surface, or by mechanical removal through treatment such as pickling, grinding, and abrading.

ADVANTAGEOUS EFFECTS OF THE INVENTION

According to the present invention, it is possible to provide a welding material for Ni-based heat resistant alloy having an excellent weldability in fabrication and to provide a weld metal, formed using the welding material, that has an excellent creep strength at high temperatures and an excellent stress relaxation cracking resistance while in use. Furthermore, it is also possible to provide a welded joint that is formed of the weld metal including this welding material and a base metal having an excellent creep strength at high temperatures.

MODE FOR CARRYING OUT THE INVENTION

In the present invention, the reasons for limiting the requirements for the composition of a welding material for Ni-based heat resistant alloy are as follows. Note that "%" for the content of each element in the following description represents "mass%".

(A) Chemical Composition of Welding Material for Ni-Based Heat Resistant Alloy

C: 0.08 to 0.12%

C (carbon) is an element effective in increasing creep strength because C increases the structural stability of weld metal in high-temperature use and precipitates in the form of carbides in long-term use. Therefore, the content of C has to be 0.08% or more. However, excessively contained C causes carbides to precipitate coarsely, resulting in a decrease in creep strength instead. For this reason, the content of C is 0.08 to 0.12%. The content of C is desirably 0.09% or more, and desirably 0.11% or less.

Si: 0.10% or less

Si (silicon) is contained as a deoxidizer and reacts with oxygen in a molten pool in welding to form oxides. The oxides remain on the surface of a bead in the form of welding slag together with oxides that have been present as oxides on a welding material surface and migrate to the molten pool with the melting of welding material. This welding slag does not melt by welding in the succeeding pass, becoming a cause of lack of fusion. For this reason, it is necessary to set the content of Si at 0.10% or less. The content of Si is desirably 0.08% or less. The lower limit of the content of Si is not specially provided because the smaller the content of Si is, the better. However, if the content of Si is excessively reduced, the deoxidation effect becomes insufficient, and the index of cleanliness of an alloy increases, which means the cleanliness of the alloy decreases, leading to a rise in producing costs of the welding material. For this reason, the content of Si is desirably 0.005% or more, and more desirably 0.01% or more.

Mn: 0.02 to 1.50%

As in the case of Si, Mn (manganese) is contained as a deoxidizer. Mn also contributes to securing creep strength, and thus the content of Mn has to be 0.02% or more. However, it is necessary to set the content of Mn at 1.50% or less because excessively contained Mn leads to embrittlement. The content of Mn is desirably 0.05% or more and is desirably 1.20% or less.

Note that, in order to prevent lack of fusion, it is preferable to adjust the content of Mn in the welding material appropriately in accordance with the content of Al, which will be described later. This reason seems to be as follows. Mn has a high vapor pressure as compared with the other alloying elements, therefore evaporates from the surface of the molten pool in welding, and ionizes to form an energizing channel of an arc, increasing the current density, which provides the effect of increasing the temperature immediately below an arc. Then, Mn consequently exerts the effect of efficiently dissolving the welding slag that remains in a preceding pass. In particular, the more the content of Al is, the more the welding slag remains in the preceding pass, and thus it is preferable to take advantage of this effect of Mn. For this reason, it is desirable to contain Mn such that the content of Mn satisfies the following formula (i) in accordance with the amount of Al contained in the welding material.

$$\mathrm{Mn} \geq 0.2 \times \mathrm{Al} - 0.1 \qquad (\mathrm{i})$$

Note that each symbol of an element in the formula denotes the content of each element (mass%) in welding material.

P: 0.008% or less

P (phosphorus) is contained as an impurity and is an element that considerably increases solidification susceptibility during welding and even increases the stress relaxation cracking susceptibility of weld metal in high-temperature use. For this reason, it is necessary to set the content of P at 0.008% or less. The content of P is desirably 0.007% or less. The lower limit of the content of P is not specially provided because the less the content of P is, the more preferable it is, but an excessive reduction of the content of P leads to a rise in producing costs. For this reason, the content of P is desirably 0.0005% or more, and more desirably 0.001 % or more.

S: 0.002% or less

As in the case of P, S (sulfur) is contained as an impurity and is an element that considerably increases solidification cracking and stress relaxation cracking susceptibilities. For this reason, it is necessary to set the content of S at 0.002% or less. The content of S is desirably 0.0015% or less. The lower limit of the content of S is not specially provided because the less the content of S is, the preferable it is, but an excessive reduction of the content of S leads to a rise in producing costs. For this reason, the content of S is desirably 0.0002% or more, and more desirably 0.0005% or more.

Ni: more than 56.0% to 60.0% or less

Ni (nickel) is an element that secures the structural stability of the weld metal in long-term use, contributing to securing creep strength. In addition, Ni is also an element that has an influence on driving force for precipitation of intermetallic compounds containing Al and has an indirect influence on the creep strength and stress relaxation cracking susceptibility of the weld metal. In order to secure a required creep strength and stress relaxation cracking resistance within the ranges of the other alloying elements in the present invention, it is necessary to set the content of Ni at more than 56.0% and 60.0% or less. The content of Ni is desirably 57.0% or more and is desirably 59.0% or less.

Co: 8.0 to 12.0%

As in the case of Ni, Co (cobalt) is an element that secures the structural stability in long-term use, contributing to securing creep strength. In addition, Co is also an element that has an influence on driving force for precipitation of intermetallic compounds containing Al and has an indirect influence on the creep strength and stress relaxation cracking susceptibility of the weld metal. In order to secure an essential creep strength and stress relaxation cracking resistance within the ranges of the other alloying elements in the present invention, it is necessary to set the content of Co at 8.0 to 12.0%. The content of Co is desirably 9.0% or more and is desirably 11.0% or less.

Cr: 18.0 to 22.0%

Cr (chromium) is an element that is essential for securing the oxidation resistance and corrosion resistance of the weld metal at high temperatures. In addition, Cr is also an element that has an influence on driving force for precipitation of intermetallic compounds containing Al and has an indirect influence on the creep strength and stress relaxation cracking susceptibility of the weld metal. However, excessively contained Cr causes structural stability at high temperatures to decrease, leading to a decrease in creep strength. In order to secure required performances within the ranges of the other alloying elements in the present invention, it is necessary to set the content of Cr at 18.0 to 22.0%. The content of Cr is desirably 19.0% or more and is desirably 21.0% or less.

Mo: 6.0 to 10.0%

Mo (molybdenum) is an element that considerably contributes to enhancing the creep strength of the weld metal by being dissolved in a matrix. In order to secure the effect sufficiently, it is necessary to contain 6.0% or more of Mo. However, Mo has an influence on driving force for precipitation of intermetallic compounds containing Al, and within the ranges of the other alloying elements in the present invention, excessively contained Mo rather causes the creep strength to decrease and causes the stress relaxation cracking resistance to decrease. For this reason, the content of Mo is 10.0% or less. The content of Mo is desirably 7.0% or more and is desirably 9.0% or less.

Ti: 0.01 to 0.50%

Ti (titanium) combines with Ni to precipitate finely in grains in the form of an intermetallic compound, contributing to enhancing the creep strength of the weld metal. To obtain the effect, it is necessary to set the content of Ti at 0.01% or more. However, excessively contained Ti leads to an excessive precipitation of intermetallic compound phases, increasing the stress relaxation cracking susceptibility of the weld metal. For this reason, the content of Ti is 0.50% or less. The content of Ti is desirably 0.05% or more and is desirably 0.40% or less.

Al: 0.50 to 1.00%

Al (aluminum) is contained as a deoxidizer. Al combines with Ni to precipitate finely in grains in the form of an intermetallic compound, and is an element also effective for securing the creep strength of the weld metal. On the other hand, excessively contained Al leads to an excessive precipitation of intermetallic compound phases, increasing stress relaxation cracking susceptibility. Additionally, Al reacts with oxygen in the molten pool in welding to form its oxide. The oxides remain on the surface of a bead in the form of welding slag together with oxides that have been present as oxides on a welding material surface and migrate to the molten pool with the melting of welding material, causing a lack of fusion. In order to, within the ranges of the other alloying elements in the present invention, secure a required creep strength and stress relaxation cracking resistance as well as to achieve the prevention of a lack of fusion owing to an excellent weldability in fabrication, it is necessary to set the content of Al at 0.50 to 1.00%. The content of Al is desirably 0.60% or more and is desirably 0.90% or less.

N: 0.010% or less

N (nitrogen) is an element that contributes to enhancing the structural stability of the weld metal, but excessively contained N causes nitrides to precipitate in large quantity in high-temperature use, leading to a decrease in the ductility and toughness of the weld metal. For this reason, it is necessary to set the content of N at 0.010% or less. The content of N is desirably 0.008% or less. Although there is no special need to provide the lower limit of the content of N, an extreme decrease in the content of N leads to a rise in the producing costs of the welding material, and thus the content of N is desirably 0.0005% or more.

O: 0.010% or less

O (oxygen) is contained as an impurity and reacts with elements having strong affinities, such as Al and Si, in the molten pool in welding to form oxides. These oxides remain on the surface of a bead in the form of welding slag together with oxides that have been present as oxides on a welding material surface and migrate to the molten pool with the melting of welding material, causing a lack of fusion. For this reason, it is necessary to set the content of O at 0.010% or less. The content of O is desirably 0.008% or less. The lower limit of the content of O is not specially provided because the less the content of O is, the better it is, but an excessive reduction of the content of S leads to a rise in producing costs. For this reason, the content of O is desirably 0.0005% or more, and more desirably 0.001% or more.

Nb: 0 to 0.50%

Nb (niobium) combines with Ni to precipitate in the form of an intermetallic compound or combines with carbon and nitrogen to precipitate in the form of a fine carbo-nitride, contributing to the enhancement of the creep strength of the weld metal. For this reason, Nb may be contained to obtain the effects described above. However, excessively contained Nb leads to an excessive precipitation of the intermetallic compound and the carbo-nitride, increasing the stress relaxation cracking susceptibility of the weld metal. For this reason, the amount of Nb is 0.50% or less if contained. The content of Nb is desirably 0.40% or less.
In order to obtain the effects of Nb stably, the content of Nb is desirably 0.01% or more, and more desirably 0.05% or more.

B: 0 to 0.0050%

In the weld metal, B (boron) segregates on grain boundaries in high-temperature use so as to strengthen the grain boundaries and subjects grain boundary carbides to fine dispersion, and is an element effective in enhancing creep strength. For this reason, B may be contained to obtain the effects described above. However, containing a large quantity of B considerably increases solidification susceptibility. For this reason, the amount of B is 0.0050% or less if contained. The content of B is desirably 0.0040% or less.
In order to obtain the effects of B stably, the content of B is desirably 0.0002% or more, more desirably 0.0005% or more.

Ca: 0 to 0.050%

Ca (calcium) improves the hot workability of the alloy, enhancing the productivity of the welding material. For this reason, Ca may be contained to obtain this effect. However, when Ca is excessively contained, Ca combines with oxygen in welding to generate welding slag, causing a lack of fusion. For this reason, the amount of Ca is 0.050% or less if contained. The content of Ca is desirably 0.020% or less.
In order to obtain the effects of Ca stably, the content of Ca is desirably 0.0005% or more, more desirably 0.001% or more.

Mg: 0 to 0.050%

As in the case of Ca, Mg (magnesium) improves the hot workability of the alloy, increasing the productivity of the welding material. For this reason, Mg may be contained to obtain this effect. However, when Mg is excessively contained, Mg combines with oxygen in welding to generate welding slag, causing a lack of fusion. For this reason, the amount of Mg is 0.050% or less if contained. The content of Mg is desirably 0.020% or less.

In order to obtain the effects of Mg stably, the content of Mg is desirably 0.0005% or more, more desirably 0.001% or more.

REM: 0 to 0.20%

As in the cases of Ca and Mg, REM improves the hot workability of the alloy, increasing the productivity of the welding material. For this reason, REM may be contained to obtain this effect. However, when REM is excessively contained, REM combines with oxygen in welding to generate welding slag, causing a lack of fusion. For this reason, the amount of REM is 0.20% or less if contained. The content of REM is desirably 0.10% or less.

In order to obtain the effects of REM stably, the content of REM is desirably 0.01% or more, and more desirably 0.02% or more.

Note that the term "REM" is a generic term for Sc, Y, and lanthanoids, 17 elements in total, and "the content of REM" refers to the total content of one, or two or more elements selected from REM. In addition, REM is typically contained in the form of misch metal. For this reason, the REM may be contained, for example, in the form of misch metal such that the amount of REM falls within the range described above.

As to the welding material for Ni-based heat resistant alloy according to the present invention, the chemical composition includes the elements mentioned above, and the balance of Fe and impurities. The term "impurities" herein means components that are mixed in steel in producing the steel industrially due to various factors including raw materials such as ores and scraps, and a producing process, and are allowed to be mixed in the steel within ranges in which the impurities have no adverse effect on the present invention.

(B) Oxide Layer Thickness Existing on Surface of Welding Material for Ni-Based Heat Resistant Alloy

Oxides present on a welding material surface migrate to a molten pool with the melting of the welding material and, particularly when the thickness of the oxides present on the welding material surface exceeds 30 $\mu$m, remain on the surface of a bead in the form of welding slag together with oxides formed by reaction in welding. These oxides have high melting points and do not melt in welding of a succeeding pass, thus causing a lack of fusion. For this reason, it is necessary to set the thickness of the oxides on the welding material surface at 30 $\mu$m or less. Note that the smaller the thickness of an oxide layer existing on the welding material surface is, the more preferable.

For example, in producing the welding material, performing heat treatment in reducing gas such as hydrogen prevents the oxidation of the surface, enabling the oxide layer thickness on the welding material surface to be adjusted to 30 $\mu$m or less. In addition, in producing the welding material, in the case where an oxide layer (oxide scales) is formed on the surface by heat treatment performed in the atmosphere or combustion gas, mechanical removal through treatment such as pickling, grinding, and abrading enables the oxide layer thickness on the welding material surface to be adjusted to 30 $\mu$m or less.

The welding material for Ni-based heat resistant alloy according to the present invention has been described above in detail, and the use of the welding material for Ni-based heat resistant alloy described above can provide an excellent weldability in fabrication. Then, using this welding material, it is possible to obtain a weld metal that is excellent in stress relaxation cracking resistance and creep strength in high-temperature use. Furthermore, using this welding material, it is possible to obtain a welded joint that is formed of a weld metal having the properties described above and a base metal of a Ni-based heat resistant alloy excellent in high temperature strength.

(C) Chemical Composition of Base Metal of Ni-Based Heat Resistant Alloy

In obtaining a welded joint using the welding material for Ni-based heat resistant alloy described above, the use of a Ni-based heat resistant alloy, as the base metal, containing Ni: 41.0 to 60.0%, Cr: 18.0 to 25.0%, and one or more elements of Mo and W: 6.0 to 10.0% in total and being excellent in high temperature strength allows the base metal to have an excellent ductility and creep strength in a high-temperature range, which is preferable.

When a Ni-based heat resistant alloy excellent in high temperature strength is used as a base metal, the base metal preferably has the chemical composition described above. The reason for this will be described below.

Ni: 41.0 to 60.0%

Ni stabilizes a metal micro-structure at high temperatures, and is an element effective in securing creep strength. For the base metal, there is no need to consider a lack of fusion, which raises an issue in the weld metal, and thus it is desirable for the base metal to contain 41.0% or more of Ni, to obtain the effect. However, since Ni is an expensive element, the use of it in large quantity leads to a rise in costs. For this reason, the upper limit of the content of Ni is desirably 60.0%. The content of Ni is more desirably 42.0% or more, and more desirably 59.0% or less.

Cr: 18.0 to 25.0%

As in the case of the weld metal, Cr is an element that is effective in securing the oxidation resistance and corrosion resistance of the base metal at high temperatures. To obtain the effects sufficiently, it is desirable for the base metal to contain 18.0% or more of Cr. For the base metal, there is no need to consider a lack of fusion, which raises an issue in the weld metal, but an excessive content of Cr degrades the stability of the metal micro-structure at high temperatures, leading to a decrease in creep strength. For this reason, the content of Cr is desirably 25.0% or less. The content of Cr is more desirably 19.0% or more, and more desirably 24.0% or less.

One or more elements of Mo and W: 6.0 to 10.0% in total

Mo and W (tungsten) are both dissolved in the matrix, and are elements that considerably contribute to the enhancement of creep strength at high temperatures. For the base metal, there is no need to consider a lack of fusion, which raises an issue in the weld metal, and thus both elements of Mo and W can be utilized for the base metal to obtain the effect described above. Therefore, 6.0% or more of one or more elements of Mo and W may be contained in total. However, since Mo and W are both expensive elements, the use of them in large quantity leads to a rise in costs. For this reason, the total content of one or more elements of Mo and W is desirably 10.0% or less. The total content of one or more elements of Mo and W in the base metal is more desirably 6.5% or more, and more desirably 9.5% or less.
Note that there is no need to contain Mo and W in combination. In the case of containing Mo alone, the content of Mo may be 6.0 to 10.0%, and in the case of containing W alone, the content of W may be 6.0 to 10.0%.
It is preferable for the base metal of a Ni-based heat resistant alloy excellent in high temperature strength to contain Ni, Cr, and one or more elements of Mo and W within the ranges described above, as well as elements of the amounts to be described below, with the balance of Fe and impurities.

C: 0.04 to 0.12%

C is an element that increases the structural stability of the base metal and precipitates in the form of carbides, contributing to the enhancement of creep strength. Unlike the weld metal, which is used as it is solidified, the base metal is subjected to heat treatment to achieve its homogenization, which makes it easier to obtain the effects. For this reason, it is preferable for the base metal to contain C, the amount of which may be 0.04% or more. However, excessively contained C causes coarse carbides to be generated in high-temperature use, leading to a decrease in creep strength instead. For this reason, when the base metal contains C, the amount of C is desirably 0.12% or less. The content of C is more desirably 0.06% or more, and more desirably 0.10% or less.

Si: 1.00% or less

Si has a deoxidation function, but an excessive content of Si causes toughness to decrease. However, for the base metal, there is no need to consider a lack of fusion, which raises an issue in the weld metal, and thus when the base metal contains Si, the amount of Si is desirably 1.00% or less, more desirably 0.80% or less. Note that the lower limit of the content of Si is not specially provided, but if the content of Si is excessively reduced, the deoxidation effect becomes insufficient, and the index of cleanliness of the alloy increases, which means the cleanliness of the alloy decreases, leading to a rise in producing costs. For this reason, the content of Si is desirably 0.01% or more, and more desirably 0.02% or more.

Mn: 1.50% or less

As in the case of Si, Mn has a deoxidation function and moreover increases structural stability, contributing not a little to securing creep strength. For this reason, it is preferable for the base metal to contain Mn. However, an excessive content of Mn leads to embrittlement. Therefore, when the base metal contains Mn, the amount of Mn is desirably 1.50% or less, more desirably 1.20% or less. The lower limit of the content of Mn is not specially provided, but the content of Mn is desirably 0.01% or more, and more desirably 0.02% or more.

P: 0.03% or less

P is contained as an impurity, and excessively contained P leads to a decrease in creep ductility and increases the liquation cracking susceptibility and stress relaxation cracking susceptibility of a weld heat affected zone (HAZ). For this reason, the content of P in the base metal is desirably 0.03% or less, more desirably 0.015% or less. The lower limit of the content of P is not specially provided, but an extreme reduction of the content of P leads to a significant rise in alloy producing costs, and thus the content of P is desirably 0.001% or more, and more desirably 0.002% or more.

S: 0.01% or less

As in the case of P, S is contained as an impurity, and excessively contained S leads to a decrease in creep ductility and increases the liquation cracking susceptibility and stress relaxation cracking susceptibility of a weld heat affected zone. For this reason, the content of S in the base metal is desirably 0.01% or less, more desirably 0.005% or less. The lower limit of the content of S is not specially provided, but an extreme reduction of the content of S leads to a significant rise in alloy producing costs, and thus the content of S is desirably 0.0002% or more, and more desirably 0.0005% or more.

Co: 15.0% or less

Also in the base metal, Co increases structural stability at high temperatures, contributing to securing creep strength. For this reason, it is preferable for the base metal to contain Co. However, since Co is a very expensive element, when the base metal contains Co, the amount of Co is desirably 15.0% or less, more desirably 13.0% or less. The content of Co is desirably 0.01% or more, and more desirably 0.03% or more.

Ti: 0.01 to 0.50%

Also in the base metal, Ti precipitates in grains in the form of a fine intermetallic compound and a carbo-nitrides, and is an element contributing to creep strength at high temperatures. For this reason, it is preferable for the base metal to contain Ti, and the amount of Ti may be 0.01% or more. However, excessively contained Ti causes the intermetallic compound and the carbo-nitride to be generated in large quantity, leading to a decrease in toughness. For this reason, when the base metal contains Ti, the amount of Ti is desirably 0.50% or less. The content of Ti is more desirably 0.05% or more, and more desirably 0.40% or less.

Nb: 0.50% or less

Also in the base metal, Nb combines with Ni to precipitate in the form of an intermetallic compound, or combines with carbon and nitrogen to precipitate in the form of a fine carbo-nitride, contributing to the enhancement of creep strength at high temperatures. For this reason, it is preferable for the base metal to contain Nb. However, excessively contained Nb leads to an excessive precipitation of the intermetallic compound and the carbo-nitride, leading to a decrease in toughness. For this reason, when the base metal contains Nb, the amount of Nb is desirably 0.50% or less, more desirably 0.40% or less. The content of Nb is desirably 0.01% or more, and more desirably 0.05% or more.

N: 0.010% or less

N is an element that is effective in stabilizing the metal micro-structure. For this reason, it is preferable for the base metal to contain N. However, excessively contained N causes carbo-nitrides to precipitate in large quantity while in use, leading to a decrease in ductility and toughness. For this reason, when the base metal contains N, the amount of N is desirably 0.010% or less, more desirably 0.008% or less. There is no special need to provide the lower limit of the content of N, but an extreme reduction of the content of N leads to a rise in producing costs, and thus the content of N is desirably 0.0005% or more.

B: 0.0050% or less

Also in the base metal, B segregates at grain boundaries in high-temperature use so as to strengthen the grain boundaries and subjects grain boundary carbides to fine dispersion, and is an element effective in enhancing creep strength. For this reason, it is preferable for the base metal to contain B. However, containing a large quantity of B increases the liquation cracking susceptibility of a weld heat affected zone. For this reason, when the base metal contains B, the amount of B is desirably 0.0050% or less, more desirably 0.0040% or less. Note that the content of B is desirably 0.0002% or more, and more desirably 0.0005% or more.

Al: 1.50% or less

Al is contained as a deoxidizer, combines with Ni to finely precipitate in grains in the form of an intermetallic compound, and is an element effective in increasing creep strength. For the base metal, there is no need to consider a lack of fusion, which raises an issue in a weld metal, and unlike the weld metal, which is used as it is solidified, the base metal is subjected to heat treatment to achieve its homogenization, which makes it easier to obtain the creep strength. For this reason, it is preferable for the base metal to contain Al. However, containing a large quantity of Al gives rise to a loss of workability, leading to a decrease in productivity. For this reason, when the base metal contains Al, the amount of Al is desirably 1.50% or less, more desirably 1.30% or less. The content of Al is desirably 0.001% or more, and more desirably 0.005% or more.

Hereafter, the present invention will be described more specifically by way of examples, but the present invention is not limited to these examples.

EXAMPLE

Alloys X and Y having chemical compositions shown in Table 1 were subjected to laboratory melting and cast into ingots, and hot forging, hot rolling, heat treatment, and machining were performed on the ingots to fabricate alloy plates each having a thickness of 12 mm, a width of 50 mm, and a length of 100 mm, as welding base metals.

Furthermore, alloys A to K having chemical compositions shown in Table 2 were subjected to laboratory melting and cast into ingots, and hot forging, hot rolling, and heat treatment were performed on the ingots to fabricate welding materials (welding wires) each having an outer diameter of 1.2 mm. Note that, in fabricating each welding material, the thickness of an oxide layer (oxide scales) on a welding material surface was changed by adjusting the atmosphere of the heat treatment in fabricating the welding material. Then, the thickness of each oxide layer was measured on a cross section obtained by cutting the welding material along a direction perpendicular to the lengthwise direction of the welding material (hereafter, referred to as a crosscut), and the average of the thicknesses was determined.

[Table 1]

Table 1

| Alloy | Chemical composition (by mass%, balance: Fe and impurities) | | | | | | | | | | | | | | |
|-------|------|------|-------|-------|------|------|------|------|-----|------|------|-------|--------|-------|
| | C | Si | Mn | P | S | Ni | Co | Cr | Mo | W | Ti | Nb | Al | B | N |
| X | 0.07 | 0.14 | 0.08 | 0.002 | 0.001 | 54.5 | 11.8 | 21.9 | 9.1 | - | 0.38 | 0.01 | 1.18 | 0.0015 | 0.005 |
| Y | 0.09 | 0.15 | 1.25 | 0.008 | 0.001 | 44.8 | 0.01 | 22.8 | 0.02 | 7.6 | 0.11 | 0.22 | 0.015 | 0.0018 | 0.006 |

[Table 2]

Table 2

| Alloy | Chemical composition (by mass%, balance: Fe and impurities) | | | | | | | | | | | | | | |
|---|---|---|---|---|---|---|---|---|---|---|---|---|---|---|---|
| | C | Si | Mn | P | S | Ni | Co | Cr | Mo | Ti | Al | O | N | Right-hand value of formula (i) [†] | Others |
| A | 0.10 | 0.03 | 0.83 | 0.002 | 0.001 | 58.1 | 10.3 | 20.8 | 8.3 | 0.35 | 0.82 | 0.004 | 0.005 | 0.06 | - |
| B | 0.11 | 0.08 | 0.87 | 0.003 | 0.001 | 57.4 | 10.9 | 21.2 | 8.1 | 0.28 | 0.77 | 0.003 | 0.008 | 0.05 | Nb: 0.02, Ca: 0.001 |
| C | 0.09 | 0.01 | 0.86 | 0.002 | 0.001 | 58.4 | 9.8 | 20.2 | 9.2 | 0.29 | 0.90 | 0.005 | 0.006 | 0.08 | B: 0.0012, Mg: 0.002 |
| D | 0.10 | 0.05 | 0.81 | 0.003 | 0.002 | 59.2 | 8.9 | 21.7 | 7.6 | 0.32 | 0.80 | 0.004 | 0.005 | 0.06 | REM: 0.01 |
| E | 0.08 | 0.06 | 0.77 | 0.002 | 0.001 | 56.1 | 11.4 | 20.4 | 9.1 | 0.25 | 1.44 * | 0.005 | 0.006 | 0.19 | - |
| F | 0.09 | 0.52 * | 0.70 | 0.002 | 0.001 | 56.2 | 11.3 | 20.7 | 9.0 | 0.34 | 0.94 | 0.021 * | 0.005 | 0.09 | Ca: 0.005 |
| G | 0.12 | 0.08 | 0.55 | 0.001 | 0.001 | 54.1 * | 12.3 * | 21.1 | 10.4 * | 0.20 | 0.98 | 0.009 | 0.004 | 0.10 | Mg: 0.008 |
| H | 0.09 | 0.09 | 0.10 | 0.004 | 0.001 | 59.0 | 10.8 | 19.9 | 8.4 | 0.34 | 0.81 | 0.005 | 0.005 | 0.06 | - |
| I | 0.08 | 0.10 | 0.05 | 0.002 | 0.001 | 59.1 | 10.4 | 20.5 | 8.5 | 0.31 | 0.84 | 0.004 | 0.005 | 0.07 | - |
| J | 0.10 | 0.10 | 1.05 | 0.003 | 0.001 | 57.1 | 10.5 | 20.6 | 8.0 | 0.28 | 0.96 | 0.003 | 0.004 | 0.09 | - |
| K | 0.09 | 0.07 | 0.54 | 0.003 | 0.001 | 57.6 | 10.4 | 20.2 | 7.9 | 0.32 | 0.80 | 0.002 | 0.005 | 0.06 | - |

* indicates that the chemical composition fell out of the range defined in the present invention.
† Mn ≥ 0.2 × Al-0.1 ... (i)

EP 3 100 818 B1

The alloy plate for welding base metal described above was beveled to include a V-type groove, having an angle of 30° and a root thickness of 1 mm, in the longitudinal direction of the alloy plate and thereafter placed on a commercial steel plate of SM400B defined in JIS G 3106 (2008) having a thickness of 25 mm, a width of 200 mm, and a length of 200 mm, with the circumference of the alloy plate subjected to restraint-weld using E Ni 6182 defined in JIS Z 3224 (2010) as a covered electrode.

Thereafter, multi-layer welding was performed in the bevel using the welding materials A to K mentioned above, by TIG welding with a heat input of 6 to 12 kJ/cm to fabricate two welded joints for each welding material.

For each welding material, one of the welded joints was used as being welded, and the other was used after being subjected to an aging heat treatment at 700°C and for 500 hours, for the following test.

First, five crosscuts were taken from each of the welded joints as being welded and after being subjected to the aging heat treatment, subjected to mirror polishing and etching, and thereafter subjected to microscopic examination under an optical microscope to be examined for the presence/absence of a defect in weld metal. The welded joint was determined to be "good" when no lack of fusion nor crack was recognized at all in all the five taken crosscuts, or determined to be "acceptable" when at least one of a lack of fusion and a crack measuring 0.2 mm or less was recognized in only one crosscut out of five, and such a welded joint was judged to be "passed". On the other hand, the welded joint was judged to be "failed" when a lack of fusion or a crack was recognized in two or more crosscuts out of five, when a lack of fusion or a crack was recognized in only one crosscut, but the size of lack of fusion or the crack exceeds 0.2 mm, or when there were two or more lacks of fusion or cracks.

Next, from a welded joint judged to be "passed" as a result of the microscopic examination, as being welded, a round bar specimen for creep rupture test was taken such that the weld metal is positioned at the center of the parallel portion of the specimen, a creep rupture test was conducted under the condition of 700°C and 196 MPa, in which the target rupture time of an alloy plate for base metal was 1000 hours, and when the rupture time of the round bar creep rupture test specimen satisfies the target rupture time (1000 hours) of the base metal alloy plate described above, the welded joint was judged to be "passed".

Table 3 shows collectively the oxide layer thicknesses on the surfaces of welding materials and the results of the test described above. Note that the marks "○○" and "○" in the column "OBSERVATIONS ON CROSS SECTION" in Table 3 indicate a passed welded joint that was judged to be "good" and "acceptable", respectively. In contrast, the mark "×" indicates that the welded joint was judged to be "failed". In addition, the mark "o" in the column "CREEP RUPTURE TEST RESULT" indicates that the creep rupture test result on the welded joint was "passed" satisfying the target rupture time (1000 hours) of a base metal alloy plate, and the mark "-" indicates that the creep rupture test was not conducted because a lack of fusion was observed in a cross section observation of the welded joint as being welded.

[Table 3]

Table 3

| Weld joint No. | Alloy for welding base metal | Alloy for welding material | Oxide layer thickness of welding material surface ($\mu$m) | Observations on cross section | | Creep rupture test result | |
|---|---|---|---|---|---|---|---|
| | | | | As welded | After aging heat treatment | | |
| 1 | x | A | <1.0 | ○○ | ○○ | ○ | Inventive example |
| 2 | | | 12.3 | ○○ | ○○ | ○ | |
| 3 | | | 24.5 | ○○ | ○○ | ○ | |
| 4 | | | 36.8 * | × #1 | × #1 | - | Comp. ex. |
| 5 | Y | A | <1.0 | ○○ | ○○ | ○ | Inventive example |
| 6 | | | 12.3 | ○○ | ○○ | ○ | |
| 7 | | | 24.5 | ○○ | ○○ | ○ | |
| 8 | | | 36.8 * | × #1 | × #1 | - | Comp. ex. |

(continued)

| Weld joint No. | Alloy for welding base metal | Alloy for welding material | Oxide layer thickness of welding material surface (μm) | Observations on cross section | | Creep rupture test result | |
|---|---|---|---|---|---|---|---|
| | | | | As welded | After aging heat treatment | | |
| 9 | X | B | <1.0 | ○○ | ○ [#4] | ○ | Inventive example |
| 10 | | | 9.8 | ○○ | ○ [#4] | ○ | |
| 11 | | | 34.8 * | × [#1] | × [#1] | - | Comp. ex. |
| 12 | | C | <1.0 | ○○ | ○ [#4] | ○ | Inventive example |
| 13 | | D | <1.0 | ○○ | ○ [#4] | ○ | |
| 14 | | E * | <1.0 | × [#1] | × [#1, 2] | - | Comparative example |
| 15 | | F * | <1.0 | × [#1] | × [#1] | - | |
| 16 | | G * | <1.0 | ○ | × [#2] | ○ | |
| 17 | | H | <1.0 | ○○ | ○○ | ○ | Inventive example |
| 18 | | I | <1.0 | ○ [#3] | ○ [#3] | ○ | |
| 19 | | J | <1.0 | ○○ | ○○ | ○ | |
| 20 | | K | <1.0 | ○○ | ○○ | ○ | |
| 21 | | | 14.6 | ○○ | ○○ | ○ | |
| 22 | | | 28.6 | ○○ | ○○ | ○ | |

* indicates that the chemical composition fell out of the range defined in the present invention.

[#1] indicates that a lack of fusion was recognized in two or more crosscuts out of five, or that a lack of fusion was recognized in only one crosscut but the size thereof exceeded 0.2 mm.

[#2] indicates that a stress relaxation crack was recognized in two or more crosscuts out of five, or that a stress relaxation crack was recognized in only one crosscut but the size thereof exceeded 0.2 mm.

[#3] indicates that one lack of fusion having a size of 0.2 mm or less was recognized in only one crosscut out of five.

[#4] indicates that one stress relaxation crack having a size of 0.2 mm or less was recognized in only one crosscut out of five.

Table 3 shows that only when a welded joint includes the welding material for Ni-based heat resistant alloy having a chemical composition and a oxide layer thickness on its surface satisfying the ranges defined in the present invention, the welded joint is a sound welded joint with no lack of fusion and no stress relaxation cracking after aging because the welded joint can reduce welding slag remaining on a weld bead, which allows a succeeding pass to melt a preceding bead sufficiently, and that the welded joint has a high creep strength because the creep rupture test result thereon is "passed". In particular, it is shown that, in the case where the amount of Mn in a welding material satisfies the formula (i) described above in the relation with the amount of Al, and in the case where the contents of Ni, Cr, Mo, and Co satisfy more desirable ranges, there are no minute lacks of fusion nor stress relaxation cracks after aging at all, and thus the welding material has an excellent weldability.

In contrast to this, as to the welded joint Nos. 4, 8, and 11, although the chemical compositions of the alloy for welding material A and B satisfied the ranges defined in the present invention, the thickness of the oxide layer on the welding material surface exceeded 30 μm, causing oxides on the welding material surface to migrate to the surface of a molten pool with the melting of the welding material and to remain on a weld bead in the form of welding slag in large quantity, which prevented a succeeding pass from melting a preceding bead sufficiently, resulting in the occurrence of a lack of fusion.

As to the welded joint No. 14, since an alloy for welding material E had a content of Al of 1.44%, which exceeded the upper limit defined in the present invention, Al reacted with oxygen (O) in a molten pool in welding to form an oxide, remaining on a weld bead in the form of welding slag in large quantity, which prevented a succeeding pass from melting a preceding bead sufficiently, resulting in the occurrence of a lack of fusion. Furthermore, a stress relaxation cracking occurred as well because intermetallic compounds were generated in large quantity in aging heat treatment.

As to the welded joint No. 15, since an alloy for welding material F had contents of Si and O that exceeded the ranges defined in the present invention, oxides were formed in a molten pool in welding, remaining on a weld bead in the form of welding slag in large quantity, which prevented a succeeding pass from melting a preceding bead sufficiently, resulting in the occurrence of a lack of fusion.

As to the welded joint No. 16, an alloy for welding material G had the contents of Ni, Co, and Mo that fell out of the ranges defined in the present invention, thus leading to early precipitation of intermetallic compounds with Al in large quantity. For this reason, a stress relaxation cracking occurred in aging heat treatment whereas the creep rupture test result was "passed".

INDUSTRIAL APPLICABILITY

According to the present invention, it is possible to provide a welding material for Ni-based heat resistant alloy having an excellent weldability in fabrication and to provide a weld metal, formed using the welding material, that has an excellent creep strength at high temperatures and an excellent stress relaxation cracking resistance while in use. Furthermore, it is also possible to provide a welded joint that is formed of the weld metal formed using this welding material and a base metal having an excellent creep strength at high temperatures.

**Claims**

1.  A welding material for Ni-based heat resistant alloy, the welding material having a chemical composition consisting, by mass%, of:

    C: 0.08 to 0.12%,
    Si: 0.10% or less,
    Mn: 0.02 to 1.50%,
    P: 0.008% or less,
    S: 0.002% or less,
    Ni: more than 56.0% to 60.0% or less,
    Co: 8.0 to 12.0%,
    Cr: 18.0 to 22.0%,
    Mo: 6.0 to 10.0%,
    Ti: 0.01 to 0.50%,
    Al: 0.50 to 1.00%,
    N: 0.010% or less,
    O: 0.010% or less,
    Nb: 0 to 0.50%,
    B: 0 to 0.0050%,
    Ca: 0 to 0.050%,
    Mg: 0 to 0.050%,
    REM: 0 to 0.20%, and
    the balance: Fe and impurities, wherein
    a thickness of an oxide layer formed on the surface of the welding material is 30 $\mu$m or less.

2.  The welding material for Ni-based heat resistant alloy according to claim 1, wherein the chemical composition contains one or more elements selected from, by mass%:

    Co: 9.0 to 11.0%,
    Cr: 19.0 to 21.0%, and
    Mo: 7.0 to 9.0%.

3.  The welding material for Ni-based heat resistant alloy according to claim 1 or claim 2, wherein the chemical composition contains one or more elements selected from, by mass%:

    Nb: 0.01 to 0.50%,
    B: 0.0002 to 0.0050%,
    Ca: 0.0005 to 0.050%,
    Mg: 0.0005 to 0.050%, and

REM: 0.01 to 0.20%.

4. The welding material for Ni-based heat resistant alloy according to any one of claim 1 to claim 3, wherein the chemical composition satisfies a following formula (i):

$$Mn \geq 0.2 \times Al - 0.1 \qquad (i)$$

wherein each symbol of an element in the formula denotes the content of each element (mass%) in welding material.

5. A weld metal formed by using the welding material for Ni-based heat resistant alloy according to any one of claim 1 to claim 4.

6. A welded joint comprising the weld metal according to claim 5 and a base metal of a Ni-based heat resistant alloy.

7. The welded joint according to claim 6, wherein the base metal has a chemical composition comprising, by mass%:

Ni: 41.0 to 60.0%,
Cr: 18.0 to 25.0%, and
one or more elements of Mo and W: 6.0 to 10.0% in total.

8. The welded joint according to claim 7, wherein the base metal has a chemical composition consisting, by mass%, of:

C: 0.04 to 0.12%,
Si: 1.00% or less,
Mn: 1.50% or less,
P: 0.03% or less,
S: 0.01% or less,
Ni: 41.0 to 60.0%,
Co: 15.0% or less,
Cr: 18.0 to 25.0%,
one or more elements of Mo and W: 6.0 to 10.0% in total,
Ti: 0.01 to 0.50%,
Nb: 0.50% or less,
N: 0.010% or less,
B: 0.0050% or less,
Al: 1.50% or less, and
the balance: Fe and impurities.

9. Use of the welding material according to any one of claims 1 to 4 for welding a Ni-based heat resistant alloy.

10. Use according to claim 9, wherein the Ni-based heat resistant alloy is utilized for a power generation boiler.

11. Use according to claim 9 or 10, wherein in producing the welding material, the oxide layer thickness on the welding material surface is adjusted to 30 $\mu$m or less by performing heat treatment in reducing gas such as hydrogen preventing the oxidation of the surface, or by mechanical removal through treatment such as pickling, grinding, and abrading.


**Patentansprüche**

1. Schweißmaterial für eine Ni-basierte, wärmebeständige Legierung, wobei das Schweißmaterial eine chemische Zusammensetzung hat, die in Masse-% besteht aus:

C: 0,08 bis 0,12 %,
Si: 0,10 % oder weniger,
Mn: 0,02 bis 1,50 %,

P: 0,008 % oder weniger,

S: 0,002 % oder weniger,

Ni: mehr als 56,0 % bis 60,0 % oder weniger,

Co: 8,0 bis 12,0 %,

Cr: 18,0 bis 22,0 %,

Mo: 6,0 bis 10,0 %,

Ti: 0,01 bis 0,50 %,

Al: 0,50 bis 1,00 %,

N: 0,010 % oder weniger,

O: 0,010 % oder weniger,

Nb: 0 bis 0,50 %,

B: 0 bis 0,0050 %,

Ca: 0 bis 0,050 %,

Mg: 0 bis 0,050 %,

SEM: 0 bis 0,20 %, und

dem Rest: Eisen und Verunreinigungen, wobei

eine Dicke einer auf einer Oberfläche des Schweißmaterials gebildeten Oxidschicht 30 $\mu$m oder weniger beträgt.

2. Schweißmaterial für eine Ni-basierte, wärmebeständige Legierung nach Anspruch 1, wobei
die chemische Zusammensetzung ein oder mehrere Element/e in Masse-% enthält, das bzw. die ausgewählt ist bzw. sind aus:

Co: 9,0 bis 11,0 %,

Cr: 19,0 bis 21,0 % und

Mo: 7,0 bis 9,0 %.

3. Schweißmaterial für eine Ni-basierte, wärmebeständige Legierung nach Anspruch 1 oder Anspruch 2, wobei
die chemische Zusammensetzung ein oder mehrere Element/e in Masse-% enthält, das bzw. die ausgewählt ist bzw. sind aus:

Nb: 0,01 bis 0,50 %,

B: 0,0002 bis 0,0050 %,

Ca: 0,0005 bis 0,050 %,

Mg: 0,0005 bis 0,050 % und

SEM: 0,01 bis 0,20 %.

4. Schweißmaterial für eine Ni-basierte, wärmebeständige Legierung nach einem der Ansprüche Anspruch 1 bis Anspruch 3, wobei
die chemische Zusammensetzung eine folgende Formel (i) erfüllt:

$$Mn \geq 0,2 \times Al - 0,1 \qquad (i),$$

wobei jedes Symbol eines Elements in der Formel den Gehalt an jedem Element (Masse-%) im Schweißmaterial bezeichnet.

5. Schweißmetall, das unter Verwendung des Schweißmaterials für eine Ni-basierte, wärmebeständige Legierung nach einem der Ansprüche Anspruch 1 bis Anspruch 4 ausgebildet ist.

6. Schweißverbindung, die das Schweißmetall nach Anspruch 5 und ein Grundmetall aus einer Ni-basierten, wärmebeständigen Legierung umfasst.

7. Schweißverbindung nach Anspruch 6, wobei
das Grundmetall eine chemische Zusammensetzung hat, die in Masse-% umfasst:

Ni: 41,0 bis 60,0 %,

Cr: 18,0 bis 25,0 % und

ein oder mehrere Element/e aus Mo und W: 6,0 bis 10,0 % insgesamt.

**8.** Schweißverbindung nach Anspruch 7, wobei
das Grundmetall eine chemische Zusammensetzung hat, die in Masse-% besteht aus:

C: 0,04 bis 0,12 %,
Si: 1,00 % oder weniger,
Mn: 1,50 % oder weniger,
P: 0,03 % oder weniger,
S: 0,01 % oder weniger,
Ni: 41,0 bis 60,0 %,
Co: 15,0 % oder weniger,
Cr: 18,0 bis 25,0 %,
ein oder mehrere Element/e aus Mo und W: 6,0 bis 10,0 % insgesamt,
Ti: 0,01 bis 0,50 %,
Nb: 0,50 % oder weniger,
N: 0,010 % oder weniger,
B: 0,0050 % oder weniger,
Al: 1,50 % oder weniger, und
dem Rest: Fe und Verunreinigungen.

**9.** Verwendung des Schweißmaterials nach einem der Ansprüche 1 bis 4 zum Schweißen einer Ni-basierten, wärmebeständigen Legierung.

**10.** Verwendung nach Anspruch 9, wobei die Ni-basierte, wärmebeständige Legierung für einen Stromerzeugungskessel genutzt wird.

**11.** Verwendung nach Anspruch 9 oder 10, wobei beim Herstellen des Schweißmaterials die Oxidschichtdicke auf der Schweißmaterialoberfläche auf 30 $\mu$m oder weniger eingestellt wird, indem eine Wärmebehandlung in Reduziergas wie etwa die Oxidation der Oberfläche verhinderndem Wasserstoff oder durch ein mechanisches Entfernen wie etwa Beizen, Schleifen oder Abtragen erfolgt.

**Revendications**

**1.** Matériau de soudage pour alliage résistant à la chaleur à base de Ni, le matériau de soudage ayant une composition chimique constituée, en % de masse, de :

C : 0,08 à 0,12 %,
Si : 0,10 % ou moins,
Mn : 0,02 à 1,50%,
P : 0,008 % ou moins,
S : 0,002 % ou moins,
Ni : plus de 56,0 % à 60,0 % ou moins,
Co : 8,0 à 12,0 %,
Cr: 18,0 à 22,0 %,
Mo: 6,0 à 10,0 %,
Ti : 0,01 à 0,50 %,
Al : 0,50 à 1,00 %,
N : 0,010 % ou moins,
O : 0,010 % ou moins,
Nb : 0 à 0,50 %,
B : 0 à 0,0050 %,
Ca : 0 à 0,050 %,
Mg : 0 à 0,050 %,
MTR : 0 à 0,20 %, et
le solde : Fe et impuretés, sachant que
une épaisseur d'une couche d'oxyde formée sur la surface du matériau de soudage est de 30 $\mu$m ou moins.

**2.** Le matériau de soudage pour alliage résistant à la chaleur à base de Ni selon la revendication 1, sachant que

la composition chimique contient un ou plusieurs éléments sélectionnés parmi, en % de masse :

Co : 9,0 à 11,0 %,
Cr: 19,0 à 21,0 %, et
Mo : 7,0 à 9,0 %.

3. Le matériau de soudage pour alliage résistant à la chaleur à base de Ni selon la revendication 1 ou la revendication 2, sachant que
la composition chimique contient un ou plusieurs éléments sélectionnés parmi, en % de masse :

Nb : 0,01 à 0,50 %,
B : 0,0002 à 0,0050 %,
Ca : 0,0005 à 0,050 %,
Mg : 0,0005 à 0,050 %, et
MTR : 0,01 à 0,20 %.

4. Le matériau de soudage pour alliage résistant à la chaleur à base de Ni selon l'une quelconque de la revendication 1 à la revendication 3, sachant que
la composition chimique satisfait à une formule suivante (i) :

$$Mn \geq 0,2 \times Al - 0,1 \qquad (i),$$

sachant que chaque symbole d'un élément dans la formule représente la teneur de chaque élément (% de masse) dans le matériau de soudage.

5. Métal de soudage formé en utilisant le matériau de soudage pour alliage résistant à la chaleur à base de Ni selon l'une quelconque de la revendication 1 à la revendication 4.

6. Joint soudé comprenant le métal de soudage selon la revendication 5 et un métal de base d'un alliage résistant à la chaleur à base de Ni.

7. Le joint soudé selon la revendication 6, sachant que
le métal de base a une composition chimique comprenant, en % de masse :

Ni : 41,0 à 60,0 %,
Cr: 18,0 à 25,0 %, et
un ou plusieurs éléments de Mo et W : 6,0 à 10,0 % au total.

8. Le joint soudé selon la revendication 7, sachant que
le métal de base a une composition chimique constituée, en % de masse, de :

C : 0,04 à 0,12 %,
Si : 1,00 % ou moins,
Mn : 1,50 % ou moins,
P : 0,03 % ou moins,
S : 0,01 % ou moins,
Ni : 41,0 à 60,0 %,
Co : 15,0 % ou moins,
Cr : 18,0 à 25,0 %,
un ou plusieurs éléments de Mo et W : 6,0 à 10,0 % au total,
Ti : 0,01 à 0,50 %,
Nb : 0,50 % ou moins,
N : 0,010 % ou moins,
B : 0,0050 % ou moins,
Al : 1,50 % ou moins, et
le solde : Fe et impuretés.

9. Utilisation du matériau de soudage selon l'une quelconque des revendications 1 à 4 pour le soudage d'un alliage résistant à la chaleur à base de Ni.

10. Utilisation selon la revendication 9, sachant que l'alliage résistant à la chaleur à base de Ni est utilisé pour une chaudière de production de puissance.

11. Utilisation selon la revendication 9 ou 10, sachant que lors de la production du matériau de soudage, l'épaisseur de couche d'oxyde sur la surface de matériau de soudage est ajustée à 30 $\mu$m ou moins en effectuant un traitement thermique sous gaz réducteur tel que de l'hydrogène pour empêcher l'oxydation de la surface, ou par enlèvement mécanique moyennant un traitement tel que décapage, meulage, et érodage.

**EP 3 100 818 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4877461 A
- US 4765956 A
- US 5372662 A
- JP 9157779 A
- JP 2001073053 A
- WO 2010013565 A
- WO 2007119847 A
- JP 2012000616 A